Europäisches Patentamt

European Patent Office

Office européen des brevets

(19)

(11) Publication number: **0 119 863**
**B1**

## (12) EUROPEAN PATENT SPECIFICATION

(45) Date of publication of patent specification: **07.01.88**

(51) Int. Cl.⁴: **H 01 C 7/10, C 04 B 35/26**

(21) Application number: **84301862.3**

(22) Date of filing: **20.03.84**

(54) **Process for the preparation of voltage non-linearity type resistors.**

(30) Priority: **22.03.83 JP 45913/83**

(43) Date of publication of application:
**26.09.84 Bulletin 84/39**

(45) Publication of the grant of the patent:
**07.01.88 Bulletin 88/01**

(84) Designated Contracting States:
**DE FR GB IT NL**

(56) References cited:
**FR-A-2 227 606**
**US-A-3 002 930**

(73) Proprietor: **CHICHIBU CEMENT CO., LTD.**
**c/o Nippon Kogyo Club Building 4-6 Marunouchi**
**1-Chome**
**Chiyoda-ku Tokyo (JP)**

(72) Inventor: **Minegishi, Keiichi**
**1100-168 Oaza-kamino**
**Kumagaya-shi Saitama-ken (JP)**
Inventor: **Akiba, Tokuji**
**6591 Shiba**
**Kawaguchi-shi Saitama-ken (JP)**
Inventor: **Katayama, Keiichi**
**1311 Oaza-ishihara**
**Kumagaya-shi Saitama-ken (JP)**
Inventor: **Machida, Hiroshi**
**291-1 Oaza-Hirato**
**Kumagaya-shi Saitama-ken (JP)**

(74) Representative: **Sheader, Brian N. et al**
**ERIC POTTER & CLARKSON 27 South Street**
**Reading Berkshire, RG1 4QU (GB)**

Courier Press, Leamington Spa, England.

## Description

The present invention relates to a process for the preparation of voltage non-linearity type resistors.

The voltage-current characteristics of a voltage non-linearity type resistor are generally given in terms of the following expression:

$$I = \left(\frac{V}{C}\right)^{\alpha}$$

wherein

V is a voltage applied on a resistor,

I is a current flowing through the resistor,

C is a constant corresponding to a voltage generated when a given current is flowed, and

an index $\alpha$ is a non-linearity coefficient. The larger the index $\alpha$, the better the non-linearity will be.

The voltage non-linearity type resistors used heretofore are based on ZnO and SiC or $Fe_2O_3$. For instance, a process for the preparation of voltage non-linearity type resistors is known from FR—A—2 227 606 comprising the steps of pre-sintering a composition of 50 mole % ZnO and 50 mole % $Fe_2O_3$ at 1000°C, reducing the pre-sintered compact to a powder, compacting the powder under pressure and sintering it again. The SiC base resistors are prepared by sintering SiC particles having a grain size of about 100 microns, and their voltage non-linearity characteristics are adjustable by varying the number of grain boundaries in the flowing direction of current, but their non-linearity coefficient is relatively small and of the order of 3—7. Referring to those for low-voltage applications, the number of grain boundaries should be reduced due to a high C value per one grain boundary. In consequence a problem arises that a reduction in the number of grain boundaries would lead to a drop of voltage resistance. Turning to the ZnO base resistors, they are advantageous in that they can be used in a wider range of voltage, since they generally have a coefficient of non-linearity of as high as 10—50 and a reduced grain size. However, they are disadvantageous in that difficulty is involved in the production thereof, thus resulting in a rise in the price, since their non-linearity deteriorates with the lapse of time due to the chemical instability of their main component ZnO.

A main object of the present invention is therefore to provide improved voltage non-linearity type resistors excelling in both characteristics and stability.

According to the present invention, this object is achieved by the provision of a process for the preparation of voltage non-linearity type resistors obtained by pre-sintering a composition of ZnO and $Fe_2O_3$, wherein pre-sintering is effected at a temperature of no lower than 700°C with a basic composition comprising X mole % of ZnO and (100—X) mole % of $Fe_2O_3$ (wherein $40 \leqq X \leqq 60$), the thus pre-sintered compact is reduced to a powder, and sintering is effected with the resulting powder to which at least one of $V_2O_5$, $Bi_2O_3$, MgO, $Al_2O_3$, $MoO_3$, $Sb_2O_3$, $SiO_2$, NiO, $SrO_2$ or PbO is further added in a proportion of 0.01—40% by weight.

The basic composition may be compacted under pressure prior to pre-sintering. The pre-sintered compact may be reduced to a powder, e.g., in a ball mill, said additive(s) added to the powder, the powder compacted under pressure and the resulting compact sintered.

The present invention will become apparent from the following detailed description with reference to the drawings, in which:—

Figure 1 is a side view of one embodiment of a resistor according to the present invention, and

Figure 2 is a view showing the voltage-current characteristics of that embodiment.

The voltage non-linearity type resistors of the present invention are prepared by two-stage sintering for the following reasons.

The reason why $ZnO/Fe_2O_3$ mixtures are pre-sintered in the first stage at a temperature of no lower than 700°C is to obtain thermally and chemically stable zinc ferrite as a resistor substance offering a primary factor for non-linearity.

The reason for effecting (main) sintering in the second stage is to control the chemical reaction(s) between at least one of high-resistive substances comprising mainly additives and zinc ferrite that is a low-resistive substance, thereby obtaining a structure wherein the zinc ferrite is surrounded by the high-resistive substance(s).

The amount of at least one of the aforesaid oxides is limited to a range of 0.01—40% by weight. Experiments have revealed that good results are achieved within such a range regardless of the combinations of the oxides to be added. When the combined amount of the oxides is lower than the lower limit, the resultant high-resistive layer is of so narrow a width that neither increased voltage resistance nor increased $\alpha$ value is obtained due to tunnel currents, etc. When the combined amount of the oxides is higher than the upper limit, on the other hand, the resulting high-resistive layer is of so wide a width that the non-linearity is depending upon break-down, and is adversely influenced by leakage currents such as Joule heat with the characteristics remaining unstable and reduced $\alpha$ values being obtained.

A comparison of two-stage sintering with single stage sintering indicates that difficulties are encountered in the achievement of sufficient non-linearity and stability and the preparation of any desired

2

voltage non-linearity type resistors in the latter case, whilst voltage non-linearity type resistors excelling in both non-linearity and stability are obtained in the former case.

The present invention will now be explained in detail with reference to the following non-restrictive examples.

Example 1

Reference is first made to single-stage sintering for the purpose of comparison.

X mole % of ZnO and (100—X) mole % of $Fe_2O_3$ were weighed within the range of $40 \leqq X \leqq 60$, as set forth in Table 1, and $Bi_2O_3$ was weighed within the range of 0.01—40% by weight with respect to the combined amount of ZnO and $Fe_2O_3$. These starting materials were mixed together in a ball mill, compacted under a pressure of 2.0 ton/cm² into discs measuring 1.0φ X 0.25 cm, and sintered for 1 hour in an electric furnace, the temperature in which was fixed at 800—1300°C.

Reference is now made to two-stage sintering according to the present invention.

As is the case with the comparative examples, X mole % of ZnO and (100—X) mole % of $Fe_2O_3$ were weighed within the range of $40 \leqq X \leqq 60$, as set forth in Table 2. These starting materials were mixed together in a ball mill, compacted under a pressure of 2.0 ton/cm² into discs measuring 1.0φ×0.7 cm, and placed in an electric furnace, the temperature in which was fixed at 900—1400°C. In this manner the disc compacts were sintered at various temperatures within that range for 1 hour. The thus obtained sintered bodies were ball-milled to obtain sintered powders of zinc ferrite. Subsequently, $Bi_2O_3$ was added to the powders in a proportion of 0.01—40% by weight to form powdery formulations. Thereupon, these formulations were compacted under a pressure of 1.0 ton/cm² into discs measuring 1.0φ×0.35 cm, and sintered in an electric furnace having its temperatures therein fixed at 700—1000°C to obtain voltage non-linearity type resistor bodies.

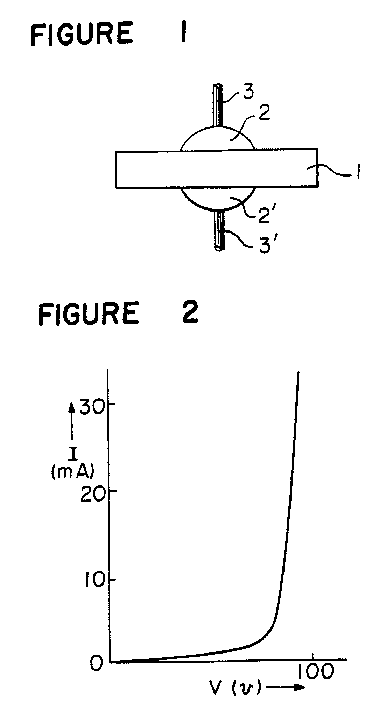

The resistor bodies obtained in this manner were provided with silver electrodes in the conventional manner to prepare voltage non-linearity type resistors, as illustrated in Figure 1.

In Figure 1, reference numeral 1 indicates a resistor body, numeral 2 and 2' indicate silver electrodes, and numerals 3 and 3' denote leads. With a standard circuit the voltage-current characteristics of the respective samples were measured at room temperature in the atmosphere, from which α, and $V_{10mA}$ (a voltage impressed when 10 mA/cm² flows per 1 mm of the inter-electrode distance) were determined. The results are given with the composition of the sintered bodies in Tables 1 and 2.

TABLE 1

| Sample Nos. | ZnO to $Fe_2O_3$ mole ratio (%) | | Additive and amount (wt%) | | Sintering temp. (°C) | $V_{10mA}$ (v) | α |
|---|---|---|---|---|---|---|---|
| | ZnO | $Fe_2O_3$ | | | | | |
| 1 | 60 | 40 | $Bi_2O_3$ | 10 | 1300 | 75 | 7 |
| 2 | 55 | 45 | " | " | 1100 | 53 | 8 |
| 3 | 50 | 50 | " | " | 900 | 27 | 8 |
| 4 | 45 | 55 | " | " | 800 | 20 | 9 |
| 5 | 40 | 60 | " | " | 900 | 9 | 9 |
| 6 | 45 | 55 | " | 0.01 | 800 | 12 | 5 |
| 7 | " | " | " | 40 | " | 15 | 10 |

TABLE 2

| Sample Nos. | ZnO to Fe$_2$O$_3$ mole ratio (%) | | Pre-sintering temp. (°C) | Additive and amount (wt%) | | Sintering temp. (°C) | V$_{10mA}$ (v) | α |
|---|---|---|---|---|---|---|---|---|
| | ZnO | Fe$_2$O$_3$ | | | | | | |
| 8 | 60 | 40 | 1400 | Bi$_2$O$_3$ | 10 | 800 | 92 | 30 |
| 9 | 55 | 45 | 1300 | ,, | ,, | ,, | 61 | 30 |
| 10 | 50 | 50 | 1100 | ,, | ,, | ,, | 21 | 32 |
| 11 | 45 | 55 | 900 | ,, | ,, | ,, | 15 | 31 |
| 12 | 40 | 60 | 1100 | ,, | ,, | ,, | 12 | 31 |
| 13 | 45 | 55 | 900 | ,, | ,, | 900 | 10 | 35 |
| 14 | ,, | ,, | 1000 | ,, | ,, | 900 | 25 | 25 |
| 15 | ,, | ,, | 900 | ,, | 0.01 | 800 | 30 | 19 |
| 16 | ,, | ,, | ,, | ,, | 40 | ,, | 13 | 18 |

From a comparison of Table 1 with Table 2, it is found that the two-stage sintering according to the present invention introduces considerable improvements in non-linearity.

Example 2
The procedures of Example 1 were repeated, provided that Bi$_2$O$_3$, MgO and Al$_2$O$_3$ were added to the basic components ZnO and Fe$_2$O$_3$, thereby to obtain Samples Nos. 17—30.

According to the procedures of Example 1 the characteristics V$_{10mA}$ and α of the samples were measured according to Example 1. The results are shown with the composition of the sintered bodies in Table 3 and 4.

TABLE 3

| Sample Nos. | ZnO to Fe$_2$O$_3$ mole ratio (%) | | Additive and amount (wt%) | | | Sintering temp. (°C) | V$_{10mA}$ (v) | α |
|---|---|---|---|---|---|---|---|---|
| | ZnO | Fe$_2$O$_3$ | Bi$_2$O$_3$ | MgO | Al$_2$O$_3$ | | | |
| 17 | 45 | 55 | 10 | 1 | — | 800 | 35 | 10 |
| 18 | ,, | ,, | ,, | 5 | — | ,, | 32 | 10 |
| 19 | ,, | ,, | ,, | 10 | — | ,, | 28 | 9 |
| 20 | ,, | ,, | ,, | — | 1 | ,, | 105 | 12 |
| 21 | ,, | ,, | ,, | — | 5 | ,, | 113 | 13 |
| 22 | ,, | ,, | ,, | — | 10 | ,, | 120 | 15 |
| 23 | ,, | ,, | ,, | 5 | 5 | ,, | 130 | 15 |

TABLE 4

| Sample Nos. | ZnO to Fe$_2$O$_3$ mole ratio (%) | | Pre-sintering temp. (°C) | Additive and amount (wt%) | | | Sintering temp. (°C) | V$_{10mA}$ (v) | α |
|---|---|---|---|---|---|---|---|---|---|
| | ZnO | Fe$_2$O$_3$ | | Bi$_2$O$_3$ | MgO | Al$_2$O$_3$ | | | |
| 24 | 45 | 55 | 900 | 10 | 1 | — | 800 | 50 | 29 |
| 25 | ″ | ″ | ″ | ″ | 5 | — | ″ | 45 | 30 |
| 26 | ″ | ″ | ″ | ″ | 10 | — | ″ | 37 | 25 |
| 27 | ″ | ″ | ″ | ″ | — | 1 | ″ | 110 | 36 |
| 28 | ″ | ″ | ″ | ″ | — | 5 | ″ | 132 | 36 |
| 29 | ″ | ″ | ″ | ″ | — | 10 | ″ | 140 | 38 |
| 30 | ″ | ″ | ″ | ″ | 5 | 5 | ″ | 200 | 48 |

From a comparison of Table 3 with Table 4, it is found that the two-stage sintering makes contribution to marked improvements in non-linearity, as is the case with Example 1. As Table 4 shows, the addition of two oxides MgO and/or Al$_2$O$_3$ in addition to Bi$_2$O$_3$ contributes to increases in V$_{10mA}$ without causing a reduction in non-linearity.

Example 3

To obtain Samples Nos. 31—44, the procedures of Example 1 were repeated, provided that Bi$_2$O$_3$, SiO$_2$ and NiO were added to the basic components ZnO and Fe$_2$O$_3$.

The characteristics V$_{10mA}$ and α of the samples were measured according to Example 1. The results are given with the composition of the sintered bodies in Tables 5 and 6.

TABLE 5

| Sample Nos. | ZnO to Fe$_2$O$_3$ mole ratio (%) | | Additive and amount (wt%) | | | Sintering temp. (°C) | V$_{10mA}$ (v) | α |
|---|---|---|---|---|---|---|---|---|
| | ZnO | Fe$_2$O$_3$ | Bi$_2$O$_3$ | SiO$_2$ | NiO | | | |
| 31 | 45 | 55 | 10 | 1 | — | 800 | 45 | 12 |
| 32 | ″ | ″ | ″ | 5 | — | ″ | 48 | 11 |
| 33 | ″ | ″ | ″ | 10 | — | ″ | 51 | 13 |
| 34 | ″ | ″ | ″ | — | 1 | ″ | 43 | 11 |
| 35 | ″ | ″ | ″ | — | 5 | ″ | 40 | 11 |
| 36 | ″ | ″ | ″ | — | 10 | ″ | 38 | 10 |
| 37 | ″ | ″ | ″ | 5 | 5 | ″ | 98 | 11 |

## 0 119 863

TABLE 6

| Sample Nos. | ZnO to Fe$_2$O$_3$ mole ratio (%) | | Pre-sintering temp. (°C) | Additive and amount (wt%) | | | Sintering temp. (°C) | V$_{10mA}$ (v) | α |
|---|---|---|---|---|---|---|---|---|---|
| | ZnO | Fe$_2$O$_3$ | | Bi$_2$O$_3$ | SiO$_2$ | NiO | | | |
| 38 | 45 | 55 | 900 | 10 | 1 | — | 800 | 55 | 30 |
| 39 | " | " | " | " | 5 | — | " | 60 | 30 |
| 40 | " | " | " | " | 10 | — | " | 67 | 32 |
| 41 | " | " | " | " | — | 1 | " | 55 | 35 |
| 42 | " | " | " | " | — | 5 | " | 51 | 30 |
| 43 | " | " | " | " | — | 10 | " | 48 | 31 |
| 44 | " | " | " | " | 5 | 5 | " | 150 | 45 |

As Table 6 shows, the two-stage sintering makes contribution to improvements in non-linearity. Furthermore, the addition of SiO$_2$ and/or NiO in addition to Bi$_2$O$_3$ gives rise to an increase in V$_{10mA}$ without incurring a reduction in non-linearity.

Example 4

To obtain Samples Nos. 45—72, the procedures of Example 1 were repeated, provided that to the basic components ZnO and Fe$_2$O$_3$ were added Sb$_2$O$_3$, MoO$_3$, V$_2$O$_5$, PbO and SrO$_2$ as low-melting oxides and Al$_2$O$_3$, MgO, NiO and SiO$_2$ as high-melting oxides.

The characteristics V$_{10mA}$ and α of the samples were measured according to Example 1. The results are given together with the composition of the sintered bodies in Tables 7 and 8.

6

TABLE 7

| Sample Nos. | ZnO to Fe$_2$O$_3$ mole ratio (%) | | Additive and amount (wt %) | | Sintering temp. (°C) | V$_{10mA}$ (v) | α |
|---|---|---|---|---|---|---|---|
| | ZnO | Fe$_2$O$_3$ | | | | | |
| 45 | 45 | 55 | Sb$_2$O$_3$ 0.1 | Al$_2$O$_3$ 5 | 1300 | 48 | 9 |
| 46 | " | " | Sb$_2$O$_3$ 1.0 | " | 1000 | 32 | 7 |
| 47 | " | " | Sb$_2$O$_3$ 10 | " | 800 | 18 | 9 |
| 48 | " | " | MoO$_3$ 10 | " | " | 41 | 10 |
| 49 | " | " | " | MgO 5 | " | 29 | 8 |
| 50 | " | " | V$_2$O$_5$ 10 | " | " | 27 | 7 |
| 51 | " | " | " | NiO 5 | " | 18 | 10 |
| 52 | " | " | PbO 10 | " | " | 26 | 10 |
| 53 | " | " | " | SiO$_2$ 5 | " | 32 | 11 |
| 54 | " | " | SrO$_2$ 10 | " | " | 30 | 12 |
| 55 | " | " | V$_2$O$_5$ 5 / MgO 5 | MoO$_3$ 5 | " | 32 | 11 |
| 56 | " | " | MoO$_3$ 5 / Al$_2$O$_3$ 5 | Sb$_2$O$_3$ 5 | " | 35 | 12 |
| 57 | " | " | SrO$_2$ 5 / SiO$_2$ 5 | PbO 5 | " | 49 | 12 |
| 58 | " | " | PbO 5 / NiO 5 | V$_2$O$_5$ 5 | " | 23 | 12 |

TABLE 8

| Sample Nos. | ZnO to Fe$_2$O$_3$ mole ratio (%) | | Pre-sintering temp. (°C) | Additive and amount (wt %) | | Sintering temp. (°C) | V$_{10mA}$ (v) | α |
|---|---|---|---|---|---|---|---|---|
| | ZnO | Fe$_2$O$_3$ | | | | | | |
| 59 | 45 | 55 | 1400 | Sb$_2$O$_3$ 0.1 | Al$_2$O$_3$ 5 | 800 | 53 | 20 |
| 60 | " | " | 1200 | Sb$_2$O$_3$ 10 | " | " | 41 | 18 |
| 61 | " | " | 900 | Sb$_2$O$_3$ 10 | " | " | 20 | 21 |
| 62 | " | " | " | MoO$_3$ 10 | " | " | 40 | 20 |
| 63 | " | " | " | " | MgO 5 | " | 51 | 27 |
| 64 | " | " | " | V$_2$O$_5$ 10 | " | " | 36 | 23 |
| 65 | " | " | " | " | NiO 5 | " | 30 | 27 |
| 66 | " | " | " | PbO 10 | " | " | 32 | 29 |
| 67 | " | " | " | " | SiO$_2$ 5 | " | 41 | 29 |
| 68 | " | " | " | SrO$_2$ 10 | " | " | 33 | 25 |
| 69 | " | " | " | V$_2$O$_5$ 5 | MoO$_3$ 5 | " | 63 | 39 |
| 70 | " | " | " | MgO 5 / MoO$_3$ 5 / Al$_2$O$_3$ 5 | Sb$_2$O$_3$ 5 | " | 77 | 42 |
| 71 | " | " | " | SrO$_2$ 5 / SiO$_2$ 5 | PbO 5 | " | 81 | 36 |
| 72 | " | " | " | PbO 5 / NiO 5 | V$_2$O$_5$ 5 | " | 54 | 35 |

As Table 8 shows, the two-stage sintering according to the present invention serves to improve non-linearity.

As stated in the foregoing, the voltage non-linearity type resistors according to the present invention are improved in respect of non-linearity and stability by the application of the two-stage sintering and thus offer many advantages from the industrial standpoint.

**Claims**

1. A process for the preparation of voltage non-linearity type resistors obtained by pre-sintering a composition of ZnO and Fe$_2$O$_3$, wherein pre-sintering is effected at a temperature of no lower than 700°C with a basic composition comprising X mole % of ZnO and (100—X) mole % of Fe$_2$O$_3$ (wherein 40≦X≦60), the thus pre-sintered compact is reduced to a powder, and sintering is effected with the resulting powder to which at least one of V$_2$O$_5$, Bi$_2$O$_3$, MgO, Al$_2$O$_3$, MoO$_3$, Sb$_2$O$_3$, SiO$_2$, NiO, SrO$_2$ or PbO is further added in a proportion of 0.01—40% by weight.

2. A process according to claim 1, wherein the basic composition is compacted under pressure prior to pre-sintering.

3. A process according to claim 1 or 2, wherein the resulting powder is compacted under pressure prior to sintering.

4. A process according to claim 1, 2 or 3, wherein the pre-sintered compact is reduced to a powder in a ball mill.

8

**0 119 863**

**Patentansprüche**

1. Verfahren zur Herstellung von nichtlinearen Spannungswiderständen, die durch Vorsintern einer Zusammensetzung aus ZnO und $Fe_2O_3$ erhalten werden, wobei das Vorsintern bei einer Temperatur von nicht weniger als 700°C durchgeführt wird, mit einer Grundzusammensetzung, die X Mol% ZnO und (100—X) Mol% $Fe_2O_3$ aufweist (mit $40 \leqq X \leqq 60$), wonach der so vorgesinterte Preßkörper in ein Pulver überführt wird und das derart erhaltene Pulver gesintert wird unter Zufügung von wenigstens einem der Stoffe $V_2O_5$, $Bi_2O_3$, MgO, $Al_2O_3$, $MoO_3$, $Sb_2O_3$, $SiO_2$, NiO, $SrO_2$ oder PbO im Verhältnis von 0,01—40 Gewichtsprozent.

2. Verfahren nach Anspruch 1, bei dem die Grundzusammensetzung unter Druck vor dem Vorsintern verdichtet wird.

3. Verfahren nach Ansprüchen 1 oder 2, in dem das erhaltene Pulver vor dem Sintern mit Druck verdichtet wird.

4. Verfahren nach Ansprüchen 1, 2 oder 3, in dem der vorgesinterte Preßkörper in einer Kugelmühle in ein Pulver überführt wird.

**Revendications**

1. Procédé pour préparer des résistances à fonction non-linéaire de la tension, obtenues en frittant au préalable une composition de ZnO et de $Fe_2O_3$, dans lequel le frittage préalable s'effectue à une température non inférieure à 700°C avec une composition de base comprenant X mole % de ZnO et (100—X) mole % de $Fe_2O_3$, (X étant compris entre 40 et 60, limites incluses), le compact ainsi préalablement fritté est réduit en poudre et on effectue un frittage avec la poudre résultante à laquelle on ajoute, en une proportion de 0,01 à 40% en poids, au moins l'un des produits suivants: $V_2O_5$, $Bi_2O_3$, MgO, $Al_2O_3$, $MoO_3$, $Sb_2O_3$, $SiO_2$, NiO, $SrO_2$ ou PbO.

2. Procédé selon la revendication 1, dans lequel la composition de base est compactée sous pression avant d'être préalablement frittée.

3. Procédé selon la revendication 1 ou 2, dans lequel la poudre résultante est compactée sous pression avant frittage.

4. Procédé selon la revendication 1, 2 ou 3, dans laquelle le compact préalablement fritté est réduit en poudre dans un broyeur à boulets.

# FIGURE 1

# FIGURE 2